# EUROPÄISCHE PATENTANMELDUNG

(11) **EP 1 624 557 A1**
(43) Veröffentlichungstag der Anmeldung: **08.02.2006**
(21) Anmeldenummer: 04018605.8
(22) Anmeldetag: 05.08.2004
(51) Int. Cl.: H02K 29/08, G05B 19/042

(54) **Elektromotor und Verfahren zum Betrieb eines Elektromotors**

(71) Anmelder: SIEMENS AKTIENGESELLSCHAFT, 80333 München (DE)
(72) Erfinder: Reinhold, Andreas, 97241 Bergtheim (DE)

(57) **Zusammenfassung**

Die Erfindung betrifft einen Elektromotor sowie ein Verfahren zum Betrieb eines Elektromotors. Um Anzahl der erforderlichen Anschlussleitungen zu verringern wird vorgeschlagen, eine gemeinsame Signalleitung (12) zur Übertragung der Sensorsignale von den Sensoren (2, 3, 4) zu der Steuereinheit (6) vorzusehen. Um auf dieser gemeinsamen Signalleitung (12) die verschiedenen anfallenden Sensorsignale übertragen zu können, ist eine Schaltungsanordnung der Sensoren (2, 3, 4) erforderlich derart, dass das über die gemeinsame Signalleitung (12) übertragene Sensorsignal mehr als zwei verschiedene Signalpegel annehmen kann.

## Beschreibung

Die Erfindung betrifft einen Elektromotor sowie ein Verfahren zum Betrieb eines Elektromotors.

Zur Kommutierung eines bürstenlosen Motors werden häufig drei Hall-Sensoren als Lagegeber verwendet. Dabei werden die Hall-Sensoren über die folgenden fünf Anschlussleitungen angeschlossen: Plusleitung (z.B. +5V), Minusleitung (GND), erste Signalleitung (Signal A), zweite Signalleitung (Signal B) und dritte Signalleitung (Signal C). Dabei können die Signale A, B und C jeweils zwei verschiedene Signalpegel (z.B. OV/5V) annehmen.

Aufgabe der vorliegenden Erfindung ist es, die Anzahl der erforderlichen elektrischen Anschlussleitungen zu verringern.

Diese Aufgabe wird durch einen Elektromotor nach Anspruch 1 bzw. ein Verfahren nach Anspruch 8 gelöst.

Ein Grundgedanke der Erfindung liegt dabei darin, eine gemeinsame Signalleitung zur Übertragung der Sensorsignale von den Sensoren zu der Steuereinheit vorzusehen. Um auf dieser gemeinsamen Signalleitung die verschiedenen anfallenden Sensorsignale übertragen zu können, ist eine Schaltungsanordnung der Sensoren erforderlich derart, dass das über die gemeinsame Signalleitung übertragene Sensorsignal mehr als zwei verschiedene Signalpegel annehmen kann.

Entsprechend den in den Unteransprüchen angegebenen vorteilhaften Ausführungsformen der Erfindung wird diese Schaltungsanordnung vorzugsweise dadurch erreicht, dass zum einen die Sensoren über eine gemeinsame Versorgungsspannungsleitung von der Steuereinheit versorgt werden und zum anderen die Sensoren über Widerstände unterschiedlicher Größe mit der Signalleitung verbunden sind. Erzeugen die Sensoren ein Signal, so fließt für jeden Sensor ein unterschiedlich hoher Strom. Erfolgt eine Strommessung in der Versorgungsspannungsleitung, so kann anhand der Stromaufnahme auf die verschiedenen Signalpegel der Sensoren geschlossen werden.

Mit Hilfe der vorliegenden Erfindung ist es möglich, die Informationen von mehreren, beispielsweise drei Signalleitungen auf nur eine einzige Signalleitung zu übertragen. Die Anzahl der benötigen elektrischen Anschlussleitungen kann somit erheblich reduziert werden, was zu einer Verringerung der Material- und Herstellungskosten führt.

Die Erfindung wird nachfolgend anhand eines Ausführungsbeispieles näher beschrieben, das mit Hilfe der Figuren erläutert wird. Hierbei zeigen:
- Fig. 1: ein schematisches Schaltbild einer Sensoreinheit eines Elektromotors,
- Fig. 2: eine Tabelle mit den Signalpegeln für sechs gültige Zustände der Hall-Sensoren,
- Fig. 3: eine Darstellung des Signalverlaufes für drei Hall-Sensoren.

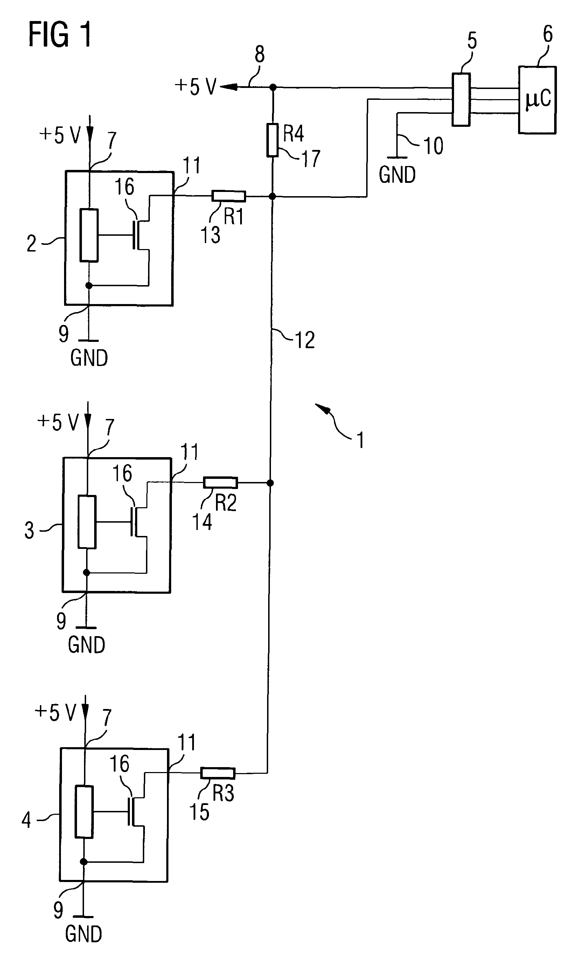

Fig. 1 zeigt einen schematischen Schaltplan einer Sensoreinheit 1 für die Verwendung in einem elektrisch kommutierten Gleichstrommotor. Die Sensoreinheit 1 umfasst drei Hall-Sensoren 2, 3, 4 zur Erfassung der Drehzahl eines Rotors (nicht abgebildet) als Motorparameter des Gleichstrommotors. In Abhängigkeit von der Lage des Rotors erfolgt dann eine Ansteuerung des Motors durch eine Steuereinheit 6. Hierzu ist die Sensoreinheit 1 über einen elektrischen Steckverbinder 5 mit der Steuereinheit 6 verbunden. Die Steuereinheit 6 dient neben der Ansteuerung des Motors zugleich zur Versorgung der Hall-Sensoren 2, 3, 4 mit einer Betriebsspannung von +5V.

Von dem Steckverbinder 5 führen lediglich drei Anschlussleitungen zu den Sensoren. Die Hall-Sensoren 2, 3, 4 sind mit ihren Versorgungsanschlüssen 7 an eine gemeinsame Versorgungsspannungsleitung 8 angeschlossen, welche die erste der drei benötigten Anschlussleitungen bildet. Mit ihren Masseanschlüssen 9 sind die Hall-Sensoren 2, 3, 4 an eine gemeinsame Masseleitung 10, die zweite erforderliche Leitung, angeschlossen. Mit Ihren Signalausgängen 11 sind die Hall-Sensoren 2, 3, 4 an eine gemeinsame Signalleitung 12 angeschlossen, welche die dritte benötigte Leitung darstellt. Der Anschluss der Hall-Sensoren 2, 3, 4 an die Signalleitung 12 erfolgt dabei über elektrische Widerstände (R1, R2, R3) 13, 14, 15.

Die zur Bestimmung der Rotorlage verwendeten Hall-Sensoren 2, 3, 4 schalten an, sobald von der Sensorfläche des Hall-Sensors eine gewisse Feldstärke detektiert wird. Der in dem ersten Hall-Sensor 2 integrierte Transistor 16 schaltet in einem solchen Fall den Widerstand 13 (R1) nach Masse. Dies bedeutet, dass der Transistor 16 eingeschaltet ist und durch den Widerstand 13 (R1) Strom fließt (Zustand "1"). Im umgekehrten Fall (Zustand "0") schaltet der Transistor 16 nicht und es findet kein Stromfluss durch den Widerstand 13 (R1) statt.

Der Wert der Widerstände 13, 14, 15 (R1, R2, R3) ist unterschiedlich gewählt, sodass die drei Ströme, die jeweils im Zustand "1" fließen, bei den drei Hall-Sensoren 2, 3, 4 verschieden sind.

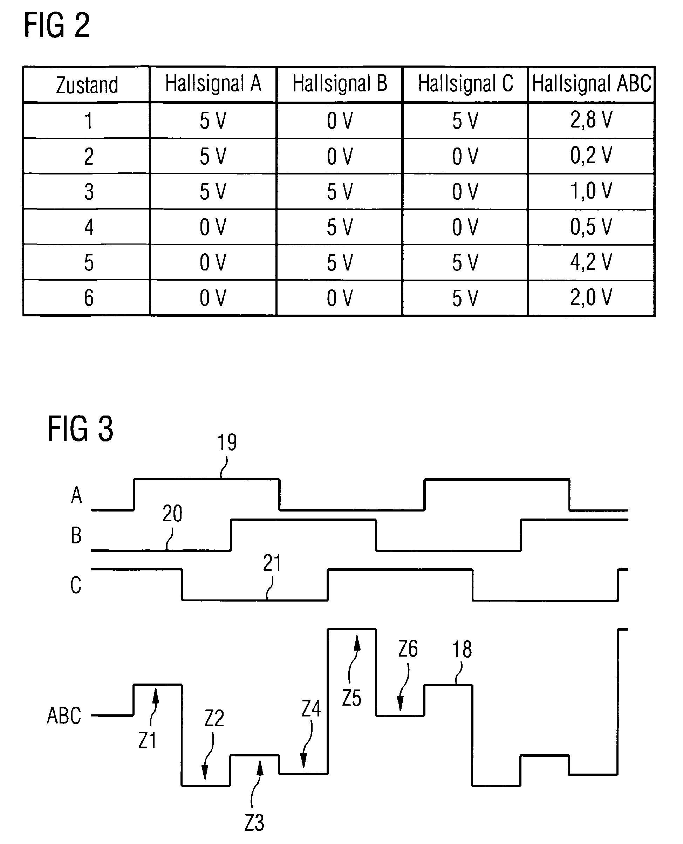

Durch die drei Hall-Sensoren 2, 3, 4 lassen sich prinzipiell insgesamt acht verschiedene Zustände darstellen, wobei die möglichen Zustände eines Hall-Sensors mit "0" (0V) bzw. "1" (5V) gekennzeichnet sind. Der Zustand "000" sowie der Zustand "111" sind Fehlerzustände der Sensoreinheit, die auf Grund der Anordnung der Hall-Sensoren 2, 3, 4 im Motor im definierten Winkel nicht möglich sind. Somit ergeben sich insgesamt sechs gültige Zustände, wie sie in Fig. 2 zusammen gefasst sind. Dabei bezeichnet "Hallsignal A" das von dem Hall-Sensor 2 ausgegebene Sensorsignal, "Hallsignal B" das von dem Hall-Sensor 3 ausgegebene Sensorsignal, "Hallsignal C" das von dem Hall-Sensor 4 ausgegebene Sensorsignal und "Hallsignal ABC" das sich auf der gemeinsamen Signalleitung ergebende Gesamtsignal.

Die je nach Zustand der Hall-Sensoren 2, 3, 4 verschiedenen Ströme (Sensorsignale) überlagern bzw. summieren sich in der gemeinsamen Signalleitung 12. Werden beispielsweise für die Widerstände 13, 14, 15 (R1, R2, R3) Werte von 60, 120 und 240 Ohm verwendet, so ergibt sich das in der rechten Spalte der Tabelle angegebene Gesamtsignal für die sechs gültigen Sensorzustände. Die Entscheidung darüber, welcher Hall-Sensor 2, 3, 4 sich gerade in einem Zustand "0" bzw. "1" befindet, wird anhand der Stromaufnahme durch die Hall-Sensoren 2, 3, 4 ermittelt. Hierzu wird der Strom in der Versorgungsspannungsleitung 8 gemessen. Im Ausführungsbeispiel dient hierzu der zwischen der Signalleitung 12 und der Versorgungsspannungsleitung 8 vorgesehene Widerstand 17 (R4). Die Strommessung kann aber auch auf eine beliebige andere Art und Weise vorgenommen werden.

Wie in der Tabelle zu sehen ist, überschneiden sich die Stromaufnahmen nicht. Mit anderen Worten gibt es für jeden Zustand der Sensoreinheit ein definiertes Band der Stromaufnahme, aus dem ermittelt werden kann, in welchem Zustand sich die einzelnen Hall-Sensoren 2, 3, 4 befinden. In einem ersten Zustand (Zustand 101) ergibt sich beispielsweise ein Gesamtsignal von 2,8V, während sich in einem zweiten Zustand (100) ein Gesamtsignal von 0,2V ergibt, usw.

Einen Signalverlauf 18, in dem alle sechs gültigen Zustände Z1, Z2, ..., Z6 und damit sechs verschiedene Strompegel in einem Bereich von 0V bis 5V dargestellt sind, zeigt Fig.3. Zugleich sind in Fig. 3 die dem entsprechenden Verläufe 19, 20, 21 der Signalpegel A, B, C der einzelnen Hall-Sensoren 2, 3, 4 dargestellt, wie sie im Stand der Technik einzeln aus der Sensoreinheit 1 herausgeführt werden.

Zur Aufnahme des über die gemeinsame Signalleitung übertragenen, analogen Gesamtsignals weist die Steuereinheit 6 an Stelle von drei digitalen Eingängen - wie aus dem Stand der Technik bekannt - einen analogen Signaleingang 22 auf. Als Steuereinheit 6 wird vorzugsweise ein Mikrocontroller (µC), ein Signalprozessor mit D/A-Wandler oder dergleichen eingesetzt.

## Patentansprüche

1. Elektromotor
- mit einer Anzahl von Sensoren (2, 3, 4) zur Erfassung von Motorkennwerten,
- mit einer Steuereinheit (6) zur Spannungsversorgung der Sensoren (2, 3, 4) und zur Ansteuerung des Motors,
- mit einer gemeinsamen Signalleitung (12) zur Übertragung von Sensorsignalen von den Sensoren (2, 3, 4) zu der Steuereinheit (6), wobei das über die Signalleitung (12) übertragene Sensorsignal mehr als zwei verschiedene Signalpegel annehmen kann.

2. Elektromotor nach Anspruch 1, **dadurch gekennzeichnet, dass** die Sensoren (2, 3, 4) über eine gemeinsame Versorgungsspannungsleitung (8) versorgt werden.

3. Elektromotor nach Anspruch 2, **gekennzeichnet durch** einen Strommesser (17) für die Versorgungsspannungsleitung (8).

4. Elektromotor nach einem der Ansprüche 1 bis 3, **dadurch gekennzeichnet**, das Signalanschlüsse (11) der Sensoren (2, 3, 4) über Widerstände (13, 14, 15) unterschiedlicher Größe mit der gemeinsamen Signalleitung (12) verbunden sind.

5. Elektromotor nach einem der Ansprüche 1 bis 4, **dadurch gekennzeichnet, dass** die Sensoren (2, 3, 4) zwei verschiedene Signalpegel ausgeben können.

6. Elektromotor nach einem der Ansprüche 1 bis 5, **dadurch gekennzeichnet, dass** die Sensoren (2, 3, 4) Hall-Sensoren zur Erfassung der Drehzahl eines Rotors sind.

7. Elektromotor nach einem der Ansprüche 1 bis 6, **dadurch gekennzeichnet, dass** die Steuereinheit (6) einen analogen Signaleingang zur Aufnahme der über die Signalleitung (12) übertragenen Signalpegel aufweist.

8. Verfahren zum Betrieb eines Elektromotors mit einer Anzahl von Sensoren (2, 3, 4) und einer Steuereinheit (6) zur Spannungsversorgung der Sensoren (2, 3, 4) und zur Ansteuerung des Motors, mit den Schritten:
- Erfassen von Motorkennwerten durch die Sensoren (2, 3, 4),
- übertragen der Sensorsignale von den Sensoren (2, 3, 4) zur der Steuereinheit (6) über eine gemeinsame Signalleitung (12), wobei das über die Signalleitung (12) übertragene Sensorsignal mehr als zwei verschiedene Signalpegel annehmen kann.
